Europäisches Patentamt

European Patent Office

Office européen des brevets

(11) Publication number : 0 667 373 A2

# (12) EUROPEAN PATENT APPLICATION

(21) Application number : 95300859.6

(22) Date of filing : 13.02.95

(51) Int. Cl.$^6$ : C08L 83/08

(30) Priority : 14.02.94 US 195509

(43) Date of publication of application :
16.08.95 Bulletin 95/33

(84) Designated Contracting States :
DE FR GB IT

(71) Applicant : DOW CORNING CORPORATION
3901 S. Saginaw Road
Midland Michigan 48686-0994 (US)

(72) Inventor : Bixler, Robert Lewis, Jr.
4402 Trail Wood Circle South
Midland, Michigan (US)

Inventor : Fiedler, Lawrence Dale
1108 Tanwood Drive
Midland, Michigan (US)
Inventor : Conway, Lori Jean
176 E. Price Road
Midland, Michigan (US)
Inventor : Gornowicz, Gerald Alphonse
4613 Bristol Court
Midland, Michigan (US)
Inventor : Wright, Antony Pope
7300 Jefferson Road
Rhodes, Michigan (US)

(74) Representative : Laredo, Jack Joseph et al
Elkington and Fife
Prospect House
8 Pembroke Road
Sevenoaks, Kent TN13 1XR (GB)

(54) Stabilizing fluorosilicone elastomers.

(57)   Disclosed is a method of stabilizing fluorosilicone elastomers against decomposition resulting from contact with oxygenated fuels. The method comprises adding a quantity of a non-extractable buffering agent to a fluorosilicone elastomer base within a range of 0.06 to 10 weight percent of the total of the weight of the non-extractable buffering agent and the weight of the fluorosilicone elastomer base. The fluorosilicone elastomer base comprises a perfluoroalkylcontaining polydiorganosiloxane and a reinforcing silica filler, where at least 90 mol percent of the perfluoroalkylcontaining polydiorganosiloxane repeating units are described by formula $RCH_2CH_2(CH_3)SiO$ and up to 10 mol percent of the repeating units are described by formula $R'_2SiO$, R is a perfluoroalkyl radical of 1 to 10 carbon atoms and each R' is independently selected from methyl, phenyl and vinyl. The fluorosilicone elastomer base containing the non-extractable buffering agent is then cured to form a fluorosilicone elastomer. In another embodiment, the invention provides a fluorosilicone elastomer made by the present method.

EP 0 667 373 A2

The present invention is a method of stabilizing fluorosilicone elastomers against decomposition resulting from contact with oxygenated fuels. The method comprises adding a quantity of a non-extractable buffering agent to a fluorosilicone elastomer base within a range of 0.06 to 10 weight percent of the total of the weight of the non-extractable buffering agent and the weight of the fluorosilicone elastomer base. The fluorosilicone elastomer base comprises a perfluoroalkyl-containing polydiorganosiloxane and a reinforcing silica filler, wherein at least 90 mole percent of the perfluoroalkyl-containing polydiorganosiloxane repeating units are described by formula $RCH_2CH_2(CH_3)SiO$, and up to 10 mole percent of the repeating units are described by formula $R'_2SiO$, R is a perfluoroalkyl radical of 1 to 10 carbon atoms and each R' is independently selected from methyl, phenyl and vinyl. The fluorosilicone elastomer base containing the non-extractable buffering agent is then cured to form a fluorosilicone elastomer. In another embodiment, the invention provides a fluorosilicone elastomer made by the present method.

Fluorosilicone elastomers are useful in contact with liquid hydrocarbon fuels because fluorosilicone elastomers are resistant to degradation by such fuels. Fluorosilicone elastomers are thus used as o-rings, gaskets, hoses and bladders in combustion engine fuel systems.

Presently, there is a significant effort to design combustion engine fuel systems to accommodate alternatives to hydrocarbon fuels, such as oxygenated fuels. The term "oxygenated fuel" means a fuel which comprises a compound containing the element oxygen. Examples of oxygenated fuels include alcohols, e.g. methanol and ethanol; ethers, e.g. methyl-tert-butyl ether and ethyl-tert-butyl ether; glycols, e.g. ethylene glycol, methylene glycol and propylene glycol; and hydrocarbon fuels containing alcohols, ethers, glycols or combinations thereof.

Under certain conditions, the performance of fluorosilicone elastomers in contact with oxygenated fuels becomes hindered. Virant et al., in "The Effect of Alternative Fuels on Fluorosilicone Elastomers", SAE Technical Paper Series, International Congress and Exposition, Detroit, Michigan, U.S.A., February 25-March 1, 1991, Technical Paper 910102, report that exposure of fluorosilicone elastomers to oxygenated fuels, such as gasoline with ether additives or methanol-fuel blends, at a temperature of 60°C. results in the loss of tensile strength, elongation and hardness of the fluorosilicone elastomer.

The performance of fluorosilicone elastomers seems adversely affected when basic or metal ion impurities are present in the oxygenated fuel or are present in the elastomer and are soluble in the oxygenated fuel. Such impurities may be present from the process and components used to prepare the fluorosilicone elastomers, or the impurities may be present in the oxygenated fuel which contacts these elastomers. Basic impurities include alkali metal hydroxides and carbonates, which are artefacts of the manufacture of the fluorosilicone elastomers and secondary amines, e.g., N,N'di-secondary butylparaphenylenediamine, which are often fuel additives. Alkali metal ion impurities are typically introduced into the fluorosilicone elastomers as remnants of the manufacture of the perfluoroalkyl-containing polydiorganosiloxane where alkali metals are used as polymerization catalysts. Alkali metals may also be contaminants in the oxygenated fuel.

We believe that decomposition of fluorosilicone elastomers is caused by rearrangement of siloxane bonds in the perfluoroalkyl-containing polydiorganosiloxane, which is catalyzed by impurities solubilized in the oxygenated fuels. Such rearrangement may produce low molecular weight species which can be extracted into the oxygenated fuel, thereby causing weight loss in the elastomer and loss of tensile strength, elongation and hardness. Yuzhelevskii, et al., in "Rearrangement of 3,3,3-Trifluoropropylmethylsiloxane in Acetone Using Basic Catalysts", J. of Gen. Chemistry, Vol. 34, No. 8, p 2810 (1964), disclose that an high molecular weight linear 3,3,3-trifluoropropylmethylsiloxane polymer, when dissolved in acetone in the presence of the catalysts NaOH, KOH, $(CH_3)_4NOH$ (sic) and sodium silanolate, degrades to form a mixture of 3,3,3-trifluoropropylmethylcyclosiloxanes. The article further discloses that the siloxane bonds of the linear polymer do not rearrange in acetone solution when these catalysts are not present, and they do not rearrange in the presence of these catalysts at room temperature if the polymer is not in an acetone solution.

Hannemann, L., et al., J. Chromatogr., (1972) Volume 70, page 81, describe trimethylsilyl-terminatedpoly(methyl-3,3,3-trifluoropropyl)siloxane polymers which decompose when dispersed in acetone and are stored in glass bottles. The surface of the glass bottles and residual catalysts from the manufacture of the trimethylsilylterminated poly(methyl-3,3,3-trifluoropropyl)siloxane polymers act as catalysts for this decomposition. Hanneman, et al., also report that keeping the trimethylsilylterminated poly(methyl-3,3,3-trifluoropropyl)siloxane polymer/acetone solution in contact with a strong acid ion exchange resin, in an amount of 0.75 times the weight of the polymer, reduces the effect of the catalysts in promoting decomposition.

In the absence of basic catalysts, strong acids would also be expected to catalyse the rearrangement of the siloxane bonds in the perfluoroalkyl-containing polydiorganosiloxane, particularly at elevated temperatures, as strong acids can be employed to catalyse the polymerization of perfluoroalkyl-containing polydiorganosiloxanes at elevated temperatures.

The method of this invention stabilizes a variety of fluorosilicone elastomers against decomposition from contact with oxygenated fuels. Our method comprises adding to the fluorosilicone elastomer base a non-extractable buffering agent or mixture of buffering agents. The non-extractable buffering agent is not strongly acidic or strongly basic, so it will not promote rearrangement of the siloxane bonds of the perfluoroalkyl-containing polydiorganosiloxane or promote corrosion in the fuel system in which the elastomer is used. However, the non-extractable buffering agent does stabilize the elastomer against the degrading effects of contact with oxygenated fuel. The cured, stabilized fluorosilicone elastomers produced by the present method are useful in fuel systems employing oxygenated fuels. The phrase "stabilized against decomposition" means that the elastomer decomposes, if at all, at a rate which is slower than the rate at which the elastomer decomposes without the presence of a non-extractable buffering agent.

The present invention introduces a method of stabilizing fluorosilicone elastomers against decomposition from contact with oxygenated fuels.

The method comprises:

a) adding a non-extractable buffering agent to a fluorosilicone elastomer base in a quantity within the range of 0.06 to 10 weight percent of the total of the weight of the non-extractable buffering agent and the weight of the fluorosilicone elastomer base, the fluorosilicone elastomer base comprising a perfluoroalkyl-containing polydiorganosiloxane and a reinforcing silica filler, wherein at least 90 mole percent of repeating units of the perfluoroalkyl-containing polydiorganosiloxane are described by formula $RCH_2CH_2(CH_3)SiO$ and up to 10 mole percent of repeating units of the perfluoroalkyl-containing polydiorganosiloxane are described by formula $R'_2SiO$, where R is a perfluoroalkyl radical of 1 to 10 carbon atoms and each R' is independently selected from methyl, phenyl and vinyl; and

b) curing the fluorosilicone elastomer base containing the non-extractable buffering agent to form a fluorosilicone elastomer.

In another embodiment, the invention provides a fluorosilicone elastomer made by the present method.

Fluorosilicone elastomer bases are known in the art and comprise a perfluoroalkyl-containing polydiorganosiloxane and a reinforcing silica filler, where at least 90 mole percent of the perfluoroalkyl-containing polydiorganosiloxane repeating units are described by formula $RCH_2CH_2(CH_3)SiO$, up to 10 mole percent of the repeating units are described by formula $R'_2SiO$, R is a perfluoroalkyl radical of 1 to 10 carbon atoms, and each R' is independently selected from methyl, phenyl and vinyl. The perfluoroalkyl radicals are typically $CF_3$, $C_2F_5$, $C_3F_7$, $C_7F_{15}$ and $C_{10}F_{21}$. The endblocking groups of the perfluoroalkyl-containing polydiorganosiloxane are hydroxyl or triorganosilyl, e.g., trimethylsilyl or dimethylvinylsilyl. The choice of endblocking group is determined by the desired curing reaction to convert the fluorosilicone elastomer base to a cured fluorosilicone elastomer. For example, when the elastomer base is cured by an organohydrogensiloxane/addition reaction catalyst combination or by a vinylspecific peroxide, the endblocking groups will contain alkenyl radicals such as vinyl groups. The perfluoroalkyl-containing polydiorganosiloxane preferably has a viscosity of 1000 Pa·s or above and, more preferably, greater than 10,000 Pa·s, so that it has a gum-like consistency.

Perfluoroalkyl-containing polydiorganosiloxanes useful in the present method and composition are commercially available. One perfluoroalkyl-containing polydiorganosiloxane useful in our invention is described in US-A 3,179,619. Another method of making these polydiorganosiloxanes is disclosed in US-A 3,002,951. The latter U.S. Patent teaches a method of preparing from cyclic siloxane trimers, an high molecular weight perfluoroalkyl-containing polydiorganosiloxane having perfluoroalkyl radicals bonded to silicon atoms. The cyclic siloxane trimers used in this latter U.S. Patent are shown in US-A 2,979,519. Other methods of making perfluoroalkyl-containing polydiorganosiloxanes are revealed in US-A-3,274,153; US-A-3,294,740 and US-A-3,373,138.

The perfluoroalkyl-containing polydiorganosiloxane may be a single type of homopolymer or copolymer or it may be a mixture of various homopolymers, copolymers or homopolymers and copolymers. A preferred perfluoroalkyl-containing polydiorganosiloxane is an hydroxyl-endblocked polymethyl-(3,3,3-trifluoropropyl)siloxane, wherein at least 99 mol percent of the repeating units are methyl-3,3,3-trifluoropropylsiloxy.

The reinforcing silica fillers of the fluorosilicone elastomer base are commercially available and are fumed silica, precipitated silica, silica aerogel and silica xerogel. Preferably, the reinforcing silica filler has a surface area of at least 100 m²/g and, more preferably, at least 200 m²/g. The reinforcing silica filler may be added in any quantity which provides the desired reinforcement without adversely affecting other properties of the elastomer. Generally, quantities of 5-100 parts of reinforcing silica filler per 100 parts of perfluoroalkyl-containing polydiorganosiloxane are useful.

The fluorosilicone elastomer base may also contain various process aids and additives. In a preferred embodiment, the reinforcing silica filler is treated with an anticrepe agent. This agent may be added to treat the reinforcing silica filler before it is added to the perfluoroalkyl-containing polydiorganosiloxane, or it may be added (in situ) to treat the reinforcing silica filler while the perfluoroalkyl-containing polydiorganosiloxane is being mixed with the reinforcing silica filler. Examples of anticrepe agents include the following and their mixtures:

silanes, e.g., trimethylchlorosilane, dimethyldichlorosilane, methyltrichlorosilane and methyltrimethoxysilane; silazanes, e.g., tetramethyldivinyldisilazane and hexamethyldisilazane; cyclic siloxanes, e.g., cyclic diorganosiloxanes; and low molecular weight polydiorganosiloxanes, e.g., hydroxyl-endblocked polydimethylsiloxane, hydroxyl-endblocked polymethylvinylsiloxane, hydroxyl-endblocked polymethyl(3,3,3-trifluoropropyl)siloxane and copolymers of these silanes, silazanes or siloxanes. The preferred anticrepe agents are low molecular weight polydiorganosiloxanes and silazanes. The anticrepe agents may be added in any quantity which will reduce crepe hardening and will not adversely affect the properties of the elastomer. Typical quantities are in a range of 0.1 to 5 weight percent of the fluorosilicone elastomer base.

The fluorosilicone elastomer base may also include extending fillers, such as titanium dioxide, zinc oxide, quartz, calcium carbonate, magnesium oxide, carbon black, graphite, glass fibers and glass microspheres. The fluorosilicone elastomer base may also include pigments, colorants, flame retardants, heat stability additives and additives to improve compression set.

Fluorosilicone elastomer bases useful in the present method and composition are also commercially available. They include those of US-A-3,179,619; US-A-4,882,368; US-A-081,172 and US-A-5,171,773.

A non-extractable buffering agent is added to the fluorosilicone elastomer base. By the term "non-extractable buffering agent" is meant a chemical substance which is essentially insoluble in oxygenated fuel and which minimizes the pH effect on the fluorosilicone elastomer of impurities in the oxygenated fuel or impurities in the fluorosilicone elastomer which are solubilized by oxygenated fuel. It is thought that minimizing the pH effect prevents catalysis of the rearrangement of the siloxane bonds of the perfluoroalkyl-containing polydiorganosiloxane, thereby minimizing decomposition of the elastomer. Non-extractable buffering agents which are useful in the present process are commercially available.

The non-extractable buffering agent is a solid. The physical shape of the non-extractable buffering agent is not critical. For example, it can be in the form of powder, pellets or chunks. It is preferred that the non-extractable buffering agent be dispersible throughout the fluorosilicone elastomer base. The most preferred non-extractable buffering agent is a powder.

The specific non-extractable buffering agent used depends on the nature of the impurities which are present in the fluorosilicone elastomer and the oxygenated fuel. Since the most common impurities found are basic, the non-extractable buffering agent for such uses is typically weakly acidic, amphoteric or less basic than the impurity. For applications involving oxygenated fuels without impurities and oxygenated fuels and fuel systems containing basic impurities, such as combustion engine fuel systems, the non-extractable buffering agent is preferably selected from a non-extractable weak acid, a non-extractable partially neutralized salt of a polybasic weak acid and an aluminium oxide compound.

By the term "weak acid" is means a compound which has a pKa within a range of 1.0 to 6.5. The weak acids include acids, anhydrides of weak acids and ion-exchange resins having weakly acidic functional groups. It is preferred that the pKa of the weak acid be within a range of 3.0 to 5.5. Examples of non-extractable weak acids include polar highly crystalline acids, polymeric acids, acids derived from oxides of boron, acids derived from oxides of phosphorus, acids derived from oxides of arsenic, acids derived from oxides of selenium and anhydrides of these acids. Specific examples of non-extractable weak acids include non-extractable carboxylic acids, e.g., terephthalic acid, polyacrylic acid and ethylene glycol bis(2-aminoethylether)tetraacetic acid; and maleic anhydride copolymers. Preferred among these are polyacrylic acid and terephthalic acid. Most preferred is polyacrylic acid.

The non-extractable weak acid may be an ion exchange resin having functional groups with a pKa value within the range of 1.0 to 6.5. Examples of such ion-exchange resins include copolymers of divinylbenzene with acrylic acid or methacrylic acid. For example, the weakly-acidic ion-exchange resin may be Dowex Ⓡ CCR-3, The Dow Chemical Company, Midland, Michigan, Amberlite Ⓡ IRP-84 and Amberlite Ⓡ CG-50, Rohm and Haas Company, Philadelphia, Pennsylvania.

Examples of the non-extractable weak acid also include weakly-acidic metal chelating compounds. By the term metal chelating compounds is meant inorganic and organic compounds which form multiple coordinate bonds with metals in solution. Examples of weakly-acidic metal chelating compounds include chelating ion-exchange resins, nitrilotriacetic acid and ethylenediaminetetraacetic acid. Further examples include metal chelating compounds which are bonded to inorganic substrates to immobilize the metal chelating compound. Specific examples of chelating compounds bonded to inorganic substrates are weakly acidic siloxanes bonded to siliceous supports such as those disclosed in US-A-4,071,546 and US-A-4,448,694. The preferred weak-acid metal chelating compound is ethylenediaminetetraacetic acid.

Another preferred non-extractable buffering agent is a non-extractable partially neutralized salt of a polybasic weak acid. Examples include disodium phosphoric acid, the monosodium and disodium salts of nitrilotriacetic acid and ethylenediaminetetraacetic acid or the trisodium salt of ethylendiaminetetraacetic acid. The preferred non-extractable partially neutralized salt of a polybasic weak acid is disodium phosphoric acid.

A third preferred non-extractable buffering agent is an aluminium oxide compound. Examples include aluminium oxide; activated aluminium oxide having a pKa value in a range of 1.0 to 9.0; alumina trihydrate; aluminium-oxide-containing thermally stable inorganic molecular sieve powders and aluminosilicates, e.g., zeolites.

The most preferred non-extractable buffering agents are activated aluminium oxides having a pKa value within the range of 1.0 to 7.0.

The present method involves adding the non-extractable buffering agent to the fluorosilicone elastomer base. The fluorosilicone elastomer base is prepared by standard methods as discussed above. The non-extractable buffering agent may be added during the formation of the fluorosilicone elastomer base or it may be added after the fluorosilicone elastomer base has been formed, either before or concurrent with the addition of the curing agent, but before the fluorosilicone elastomer base is fully cured. The non-extractable buffering agent is added and mixed into the fluorosilicone elastomer base through standard methods. For example, it may be milled or mixed into the fluorosilicone elastomer base with a two-roll mill or a dough-type mixer. In a preferred embodiment, the non-extractable buffering agent is mixed to homogeneity in the fluorosilicone elastomer base.

The quantity of non-extractable buffering agent is within a range of 0.06 to 10 weight percent of the total of the weight of the non-extractable buffering agent and the weight of the fluorosilicone elastomer base. The quantity is dependent on the specific non-extractable buffering agent and the specific elastomer base. It is preferred that the minimum quantity of buffering agent exceed the amount typically required to compensate for the pH effects of impurities in the elastomer, thereby leaving agent available to compensate for the pH effects of impurities in the fuel. Quantities of non-extractable buffering agent greater than 0.10 weight percent of the total of the weight of the buffering agent and the weight of the fluorosilicone elastomer base are preferred. Most preferred are quantities within a range of 0.10 to 5 weight percent. Quantities greater than 10 weight percent may adversely affect other physical properties of the fluorosilicone elastomer.

A curing agent is added to the fluorosilicone elastomer base containing the non-extractable buffering agent to effect formation of a cured fluorosilicone elastomer. The preferred curing agents are organic peroxides which are well-known in the silicone art as curing agents. Examples of the organic peroxides include benzoyl peroxide, tertiarybutyl perbenzoate, dicumyl peroxide, chlorobenzoyl peroxides, ditertiary butyl peroxide, 2,5-bis-(tert-butyl)peroxy-2,5-dimethyl hexane and tert-butylperoxy isopropyl carbonate. The amount of organic peroxide is not critical. A useful amount is in a range of 0.1 to 3 weight percent of the fluorosilicone elastomer base containing the non-extractable buffering agent.

The fluorosilicone elastomer base containing the non-extractable buffering agent is also curable by other curing agents known in the art, for example, an organohydrogenpolysiloxane/addition reaction catalyst combination. The organohydrogenpolysiloxane of this combination must contain at least 2 silicon-bonded hydrogen atoms in each molecule. Examples of the organohydrogenpolysiloxane include trimethylsiloxy-terminated dimethylsiloxanemethylhydrogensiloxane copolymers, hydrogendimethylsiloxyterminated dimethylsiloxanemethylhydrogensiloxane copolymers and similar compounds. The molecular structure may be straight-chained, branched or cyclic and its degree of polymerization (DP) should be at least 2. Examples of the addition reaction catalyst include platinum and platinum compound catalysts, e.g., platinum black, chloroplatinic acid, platinum tetrachloride, chloroplatinic acid/olefin complexes, chloroplatinic acid/methylvinylsiloxane complexes and similar compounds; or a microparticulate thermoplastic catalyst which contains a platinum or platinum compound catalyst as described above; rhodium compounds and cobalt carbonyl.

The temperature range for curing the fluorosilicone elastomer base may be room temperature or above. A preferred temperature range is 50°C. to 250°C. The temperature range should be sufficient to activate the catalyst used.

The following examples are included for illustrative purposes.

Example 1

Trials were run with cured fluorosilicone elastomer samples which were immersed in test fuels and heated under pressure with continuous stirring of the fuels. The elastomer samples were periodically removed from the fuels, dried in a vacuum oven and weighed. The percentage weight losses of the elastomer samples were used as indicia of the degree of degradation of the elastomers.

Each of the following tables identifies the presence or absence of a non-extractable buffering agent, the composition of the fluorosilicone elastomer, the composition of the test fuels and the temperature of the fuels. The time of exposure is expressed in hours. The term "parts" refers to weight parts. The number of weight parts of the non-extractable buffering agent is the number per 100 weight parts of the fluorosilicone elastomer base composition.

The test fuels were based on a 1:1 mixture by volume of toluene and isooctane which included varying concentrations of methanol. The test fuel designated as M5 contained 5% methanol by volume; M25 contained 25% methanol by volume; and M40 contained 40% methanol by volume.

The fluorosilicone elastomers are designated as Elastomers A and B. The compositions and methods of preparation of the elastomer bases of Elastomer A and B are described below:

<u>Elastomer A Base</u>

Weight     Component
Percent

43.5       (a)  hydroxyl-endblocked polymethyl(3,3,3-trifluoro-propyl)siloxane gum, containing 100 mole percent trifluoropropylmethylsiloxane units and having a Williams plasticity in a range of 2.3 to 3.6 mm (0.090 to 0.140 inch);

19.9       (b)  hydroxyl-endblocked methyl(3,3,3-trifluoro-propyl)methylvinylpolysiloxane, containing 0.596 mole percent methylvinylsiloxane units with the remainder of the units being methyl-3,3,3-trifluoro-propylsiloxane units and having a Williams plasticity in a range of 2.3 to 2.8 mm (0.090 to 0.110 inch);

2.0        (c)  hydroxyl-endblocked dimethylsiloxane-methyl-vinylsiloxane copolymer, containing 4 mole percent methylvinylsiloxane units with the remainder being dimethylsiloxane and having a Williams plasticity of 1.5 to 1.8 mm (0.060 to 0.070 inch);

26.6       (d) fumed silica filler having a surface area of 400 $m^2/g$;

6.6        (e)  hydroxyl-endblocked polymethyl(3,3,3-trifluoro-propyl)siloxane containing 6 weight percent silicon-bonded hydroxyl groups and having a viscosity of 0.1 Pa·s at 25°C.;

0.3        (f)  hydroxyl-endblocked polymethylvinylsiloxane, containing silicon-bonded hydroxyl radicals in an amount of 4 to 5.5 weight percent and an average of 3 to 20 methylvinylsiloxane units per molecule; and

0.7        (g)  tetramethyldivinyldisilazane.

Elastomer A base was prepared substantially as disclosed in US-A-5,081,172, by adding components (a) through (g) to a dough mixer equipped with heating means and means for drawing a vacuum. The contents of the mixer were then massed under vacuum at a temperature of 115°C. for an hour forming elastomer A base.

Elastomer B Base

| Weight Percent | Component |
|---|---|
| 59.2 | (a) hydroxyl-endblocked methyltrifluoropropyl-methylvinylpolysiloxane, containing 1.0 mole percent methylvinylsiloxane units, with the remainder being methyl-3,3,3-trifluoropropyl-siloxane units and having a Williams plasticity of 2.5 to 3.6 mm (0.100 to 0.140 inch); |
| 23.7 | (b) fumed silica having a surface area of 400 $m^2$/g; |
| 7.0 | (c) hydroxyl-endblocked polymethyl(3,3,3-trifluoropropyl)siloxane, having a viscosity of 1 Pa·s at 25°C. and containing 6 weight percent silicon-bonded hydroxyl groups; |
| 0.56 | (d) hydroxyl-endblocked polymethylvinylsiloxane with silicon-bonded hydroxyl radical in an amount of 4 to 5.5 weight percent and an average of 3 to 20 methylvinylsiloxane units per molecule; |
| 4.6 | (e) quartz having a particle size of up to 5 $\mu$m; |
| 1.81 | (f) hydroxyl-endblocked dimethylsiloxane-methylvinylsiloxane copolymer, containing 4 mole percent methylvinylsiloxane units with the remainder being dimethylsiloxane units and having a Williams plasticity of 3.6 to 4.3 mm (0.140 to 0.170 inch); and |
| 2.8 | (g) fumed silica having a surface area of 250 $m^2$/g. |

Elastomer B Base was prepared by first mixing together components (a) through (d) in a dough mixer and heating for 3 hours at 175°C., and then adding component (e) with mixing. Following this, components (f) and (g) were added and massed with the already-massed contents of the mixer at a temperature of 175°C. for 1 hour forming Elastomer B base.

Addition of Non-extractable Buffering Agents

The non-extractable buffering agents were massed into the pre-formed elastomer bases on a two-roll mill in the quantities indicated in the tables.

## Curing

A curing agent comprising 50 wt% active 2,5 bis(tert-butyl peroxy)-2,5-dimethylhexane was milled into each of elastomer bases A and B in a quantity equaling 0.5 to 1.0 wt% of the elastomer base. The elastomer bases were cured for ten minutes at 171°C. and post-cured for 4 hours at 200°C.

## Tables

The data in Table I demonstrate the effect of stabilizing Elastomer A with ethylenediaminetetraacetic acid (EDTA) and disodium phosphoric acid. Data in Tables II-VIII show the effect of stabilizing Elastomer B with various non-extractable buffering agents.

The activated aluminium oxides discussed in Tables VII and VIII were Brockmann I, standard grade CA 105 $\mu$m (150 mesh), sold by Aldrich Chemical Co., Inc., Milwaukee, Wisconsin, U.S.A. The pH values of the various activated aluminium oxides were, respectively:

(a) $9.5 \pm 0.5$
(b) $7.0 \pm 0.5$
(c) approx. 6.0
(d) $4.5 \pm 0.5$

**TABLE I**

| Elastomer A with and without Non-extractable Buffering Agents in M40 Fuel at 120°C. | | | | | |
|---|---|---|---|---|---|
| | Non-extractable Buffering Agents | | | | |
| Parts | None | 2 EDTA | 5 EDTA | 2 Disodium Phosphoric Acid | 5 Disodium Phosphoric Acid |
| time (h) | weight loss (%) | | | | |
| 21 | ---- | 1.4 | 1.6 | ---- | 2.0 |
| 23 | ---- | --- | --- | 2.0 | ---- |
| 24 | 13.2 | --- | --- | ---- | ---- |
| 47 | 32.2 | --- | --- | ---- | ---- |
| 66 | ---- | 2.8 | --- | ---- | 10.5 |
| 67 | 41.5 | --- | --- | ---- | ---- |
| 68 | ---- | --- | 2.7 | ---- | ---- |
| 90 | ---- | --- | --- | 7.4 | ---- |
| 135 | ---- | --- | --- | ---- | 25.2 |
| 136 | ---- | 3.5 | --- | ---- | ---- |
| 137 | ---- | --- | 3.8 | ---- | ---- |
| 159 | ---- | --- | --- | ---- | 31.4 |
| 162 | ---- | --- | --- | 19.4 | ---- |
| 182 | ---- | --- | --- | 22.6 | ---- |
| 302 | ---- | 6.9 | --- | ---- | ---- |
| 303 | ---- | --- | 8.5 | ---- | ---- |

**TABLE II**

| Elastomer B with No Non-extractable Buffering Agent in M40 Fuel at 120°C. ||
|---|---|
| time (h) | weight loss (%) |
| 20.5 | 1.9 |
| 42 | 3.5 |
| 87.5 | 6.0 |
| 157 | 11.7 |

## TABLE III

### Elastomer B with EDTA in M40 Fuel at Various Concentrations and Temperatures

| time (h) | 110°C. 2.5 | 120°C. 2.5 | 125°C. 2.5 | 130°C. 2.5 | 130°C. 1 | 130°C. 5 |
|---|---|---|---|---|---|---|
| | weight loss (%) ||||||
| 19 | 2.5 | --- | --- | --- | --- | --- |
| 20 | --- | 2.0 | 2.0 | 2.1 | --- | --- |
| 20.5 | --- | 1.8 | --- | 2.1 | --- | --- |
| 21.5 | 2.8 | --- | --- | 3.3 | 3.2 | 3.4 |
| 24.8 | 2.6 | --- | --- | --- | --- | --- |
| 64.5 | --- | --- | --- | 4.6 | --- | --- |
| 65.5 | --- | --- | --- | 3.7 | --- | --- |
| 87.5 | --- | --- | --- | 5.3 | 4.7 | 6.0 |
| 89.5 | --- | 3.4 | 3.8 | 4.0 | --- | --- |
| 90 | --- | 3.3 | --- | --- | --- | --- |
| 159 | --- | --- | --- | 6.9 | --- | --- |
| 159.5 | --- | 4.0 | --- | 10.1 | --- | --- |
| 162 | 4.6 | --- | --- | ---- | --- | --- |
| 163 | 4.2 | --- | --- | ---- | --- | --- |
| 183 | --- | 4.9 | 5.4 | 6.0 | --- | --- |
| 208.5 | --- | --- | --- | 10.9 | --- | 11.1 |
| 230 | --- | --- | --- | ---- | 10.3 | ---- |
| 252.5 | --- | --- | --- | 19.3 | ---- | ---- |
| 255 | 5.9 | --- | --- | ---- | ---- | ---- |
| 323 | --- | --- | --- | 17.4 | ---- | ---- |
| 323.5 | --- | 7.2 | --- | ---- | ---- | ---- |
| 324.5 | 5.7 | --- | --- | ---- | ---- | ---- |
| 325 | --- | --- | --- | ---- | 16.5 | ---- |
| 325.5 | --- | --- | --- | 19.7 | ---- | 17.7 |
| 331.8 | 4.9 | --- | --- | ---- | ---- | ---- |
| 377.5 | --- | --- | 11.7 | ---- | ---- | ---- |
| 391 | --- | 8.4 | --- | ---- | ---- | ---- |
| 399 | 8.0 | --- | --- | ---- | ---- | ---- |
| 490.5 | 7.8 | --- | --- | ---- | ---- | ---- |
| 500.8 | 6.7 | --- | --- | ---- | ---- | ---- |
| 664.8 | 8.1 | --- | --- | ---- | ---- | ---- |

## TABLE IV

**Elastomer B with Polyacrylic Acid in M5 or M40 Fuel at Various Concentrations and Temperatures**

| Temp.<br>Parts<br>Fuel<br><br>time (h) | 100°C.<br>2.5<br>M5 | 110°C.<br>2.5<br>M40 | 120°C.<br>1<br>M40 | 120°C.<br>2.5<br>M40 | 120°C.<br>5<br>M40 | 130°C.<br>2.5<br>M40 |
|---|---|---|---|---|---|---|
|  |  |  | weight loss (%) |  |  |  |
| 19.5 | --- | 2.8 | --- | 3.1 | --- | --- |
| 24 | --- | --- | 1.2 | --- | 1.1 | --- |
| 24.8 | 1.6 | 2.3 | --- | 2.4 | --- | --- |
| 26.5 | --- | --- | --- | --- | --- | 3.3 |
| 47 | --- | --- | --- | --- | --- | 4.0 |
| 47.5 | --- | --- | 1.7 | --- | 2.0 | --- |
| 66 | --- | --- | --- | 3.8 | --- | --- |
| 137 | --- | --- | --- | 4.7 | --- | --- |
| 138.5 | --- | 3.9 | --- | --- | --- | --- |
| 143 | --- | --- | --- | --- | --- | 6.9 |
| 162 | --- | --- | 5.3 | --- | 5.2 | --- |
| 163.8 | --- | --- | --- | 4.8 | --- | --- |
| 229.5 | --- | --- | --- | 6.1 | --- | --- |
| 239 | --- | --- | --- | 3.7 | --- | --- |
| 256.5 | --- | --- | 11.6 | --- | 8.2 | --- |
| 283 | --- | --- | --- | --- | --- | 11.9 |
| 303.5 | --- | 4.8 | --- | --- | --- | --- |
| 329 | --- | --- | --- | 3.7 | --- | --- |
| 330 | --- | --- | --- | 6.9 | --- | --- |
| 331.3 | 1.7 | --- | --- | --- | --- | --- |
| 331.8 | --- | 4.5 | --- | --- | --- | --- |
| 465 | --- | 5.7 | --- | --- | --- | --- |
| 498 | --- | --- | --- | 5.3 | --- | --- |
| 499 | --- | --- | --- | 9.0 | --- | --- |
| 500.3 | 1.7 | --- | --- | --- | --- | --- |
| 500.8 | --- | 6.1 | --- | --- | --- | --- |
| 664.8 | --- | 6.6 | --- | --- | --- | --- |
| 830.8 | 1.9 | --- | --- | --- | --- | --- |

## TABLE V

### Elastomer B with Alumina Trihydrate in M40 Fuel at Various Concentrations and Temperatures

| Temp.<br>Parts | 110°C<br>2.5 | 120°C<br>2.5 | 130°C<br>2.5<br>* | 120°C<br>1 | 120°C<br>5 | 130°C<br>1 | 130°C<br>5 | 120°C<br>25 |
|---|---|---|---|---|---|---|---|---|
| time(h) | | | | weight loss (%) | | | | |
| 21 | --- | --- | 2.2 | --- | --- | --- | --- | --- |
| 22.5 | 1.7 | 2.1 | --- | --- | --- | --- | --- | --- |
| 24 | --- | --- | --- | 1.5 | 2.2 | 2.0 | 2.9 | --- |
| 24.3 | --- | --- | --- | --- | --- | --- | --- | 3.3 |
| 24.8 | 1.7 | --- | --- | --- | --- | --- | --- | --- |
| 43.3 | --- | --- | 2.8 | --- | --- | --- | --- | --- |
| 46 | --- | --- | --- | 2.0 | 3.0 | 2.5 | 5.3 | --- |
| 65 | --- | --- | 3.5 | --- | --- | --- | --- | --- |
| 68.5 | --- | 2.8 | --- | --- | --- | --- | --- | --- |
| 74.3 | --- | --- | --- | --- | --- | --- | --- | 6.5 |
| 117.8 | --- | --- | --- | --- | --- | --- | --- | 7.5 |
| 142 | 2.8 | --- | --- | --- | --- | --- | --- | --- |
| 155 | --- | --- | 6.7 | --- | --- | --- | --- | --- |
| 163.8 | 2.8 | --- | --- | --- | --- | --- | --- | --- |
| 164.5 | --- | --- | --- | 3.8 | 6.5 | 6.4 | 12.8 | --- |
| 189.3 | --- | --- | --- | --- | --- | --- | --- | 10.8 |
| 235.5 | --- | --- | --- | 4.4 | 8.4 | 8.8 | 15.5 | --- |
| 238.5 | --- | 5.0 | --- | --- | --- | --- | --- | --- |
| 330 | 4.2 | --- | --- | --- | --- | --- | --- | --- |
| 405 | --- | 7.2 | --- | --- | --- | --- | --- | --- |
| 499 | 5.1 | --- | --- | --- | --- | --- | --- | --- |

* Elastomer blistered

### TABLE VI

| Elastomer B with 2.5 parts Alumina Trihydrate in M25 Fuel | | |
|---|---|---|
| Temp. | 120°C. | 130°C. |
| time (h) | weight loss (%) | |
| 25 | 1.7 | 2.4 |
| 97 | 2.7 | 3.8 |
| 187.5 | 3.6 | 5.8 |
| 258 | 4.4 | 7.6 |

## TABLE VII

| Elastomer B with 1 part Activated Aluminium Oxides (a), (b), (c) and (d) in M40 Fuel at 120°C. | | | | |
|---|---|---|---|---|
| | Activated Aluminium Oxides | | | |
| | (a) | (b) | (c) | (d) |
| time (h) | weight loss (%) | | | |
| 21.5 | ---- | 1.8 | --- | --- |
| 24.0 | 2.5 | ---- | --- | --- |
| 26.0 | ---- | ---- | 1.9 | 1.7 |
| 69.0 | ---- | 3.1 | --- | --- |
| 72.0 | 5.1 | ---- | --- | --- |
| 92.5 | ---- | ---- | 3.2 | 2.8 |
| 163.5 | ---- | ---- | 5.0 | 4.2 |
| 164.3 | ---- | 5.8 | --- | --- |
| 171.0 | 11.7 | ---- | --- | --- |
| 330.0 | ---- | ---- | 9.5 | 7.2 |
| 334.0 | ---- | 11.6 | --- | --- |

## TABLE VIII

| Elastomer B with 2.5 parts Activated Aluminium Oxides (a), (b), (c) and (d) in M40 Fuel at 120°C. | | | | |
|---|---|---|---|---|
| | Activated Aluminium Oxides | | | |
| | (a) | (b) | (c) | (d) |
| time (h) | weight loss (%) | | | |
| 21.5 | 2.2 | 1.7 | 1.8 | 1.6 |
| 69.0 | 4.0 | 2.6 | 2.6 | 2.2 |
| 164.3 | 8.4 | 4.5 | 4.3 | 3.1 |
| 334.0 | 15.3 | 8.5 | 8.2 | 5.6 |

## Claims

1. A method of stabilizing a fluorosilicone elastomer against decomposition resulting from contact with oxygenated fuels, the method comprising:

a) adding a non-extractable buffering agent to a fluorosilicone elastomer base in a quantity within a range of 0.06 to 10 weight percent of the total of the weight of the non-extractable buffering agent and the weight of the fluorosilicone elastomer base, the fluorosilicone elastomer base comprising a perfluoroalkyl-containing polydiorganosiloxane and a reinforcing silica filler, where at least 90 mole percent of repeating units of the perfluoroalkyl-containing polydiorganosiloxane are described by formula $RCH_2CH_2(CH_3)SiO$ and up to 10 mole percent of repeating units of the perfluoroalkyl-containing polydiorganosiloxane are described by formula R'$_2$SiO, R is a perfluoroalkyl radical of 1 to 10 carbon atoms and each R' is independently selected from methyl, phenyl and vinyl; and b) curing the fluorosilicone elastomer base containing the non-extractable buffering agent to form a fluorosilicone elastomer.

2. A method according to claim 1, wherein the fluorosilicone elastomer base further comprises an anticrepe agent.

3. A method according to claims 1 or 2, wherein the non-extractable buffering agent is selected from non-extractable weak acids and non-extractable partially neutralized salts of polybasic weak acids.

4. A method according to any of claims 1 to 3, wherein the quantity of non-extractable buffering agent is within a range of 0.1 to 5 weight percent of the total of the weight of the non-extractable buffering agent and the weight of the fluorosilicone elastomer base.

5. A method according to any of claims 1 to 4, wherein the perfluoroalkyl-containing polydiorganosiloxane is polymethyl-(3,3,3-trifluoropropyl)siloxane, where at least 99 mole percent of repeating units of the polymethyl (3,3,3-trifluoropropyl)siloxane are methyl-3,3,3trifluoropropyl, the reinforcing silica filler has a surface area of at least 100 m$^2$/g, an anticrepe agent is present which is selected from silanes, silazanes, a cyclic siloxane and low molecular weight polydiorganosiloxanes and the non-extractable buffering agent is selected from weak acids and partially neutralized salts of polybasic weak acids.

6. A method according to any of claims 1 to 5, wherein the non-extractable buffering agent is selected from polyacrylic acid, ethylenediaminetetraacetic acid and disodium phosphoric acid, in a range of 1.0 to 9.0, alumina trihydrate, zeolites and aluminium-oxide-containing molecular sieves.